# EUROPEAN PATENT SPECIFICATION

(11) **EP 4 576 746 B1**
(45) Date of publication and mention of the grant of the patent: **28.01.2026**
(21) Application number: 23218315.2
(22) Date of filing: 19.12.2023
(51) Int. Cl.: H04L 69/16

(54) **TRANSMISSION METHOD AND BASEBAND UNIT FOR 5G NETWORK SYSTEM**
ÜBERTRAGUNGSVERFAHREN UND BASISBANDEINHEIT FÜR 5G-NETZWERKSYSTEM
PROCÉDÉ DE TRANSMISSION ET UNITÉ DE BANDE DE BASE POUR SYSTÈME DE RÉSEAU 5G

(43) Date of publication of application: 25.06.2025
(73) Proprietor: HTC Corporation, Taoyuan City 330, (TW)
(72) Inventor: CHANG, Heng-Che, 330 Taoyuan City (TW)
(74) Representative: Klang, Alexander H.

(56) References cited:
- CN-A- 114 039 933
- ANONYMOUS: "config_netfilter_xt_target_tcpmss - kernelconfig.io", 7 December 2023 (2023-12-07), XP093160387, Retrieved from the Internet <URL:https://web.archive.org/web/20231207060055/https://www.kernelconfig.io/config_netfilter_xt_target_tcpmss> [retrieved on 20240507]

## Description

### Background of the Invention

### 1. Field of the Invention

The present invention relates to a transmission method and baseband unit for 5G network system, and more particularly, to a transmission method and baseband unit for 5G network system capable of avoiding Internet Protocol (IP) fragmentation problem.

### 2. Description of the Prior Art

To exchange application packets between the 5G core (5GC) network and the baseband unit (BBU), application packets are encapsulated with the GTP header and the UDP header, which might lead to the packet length of the GTP encapsulated application packets are bigger than the MTU of nodes between 5GC and BBU. Maximum transmission unit (MTU) denotes the maximum length for a single IP packet that is going to be sent out. If the Internet Protocol (IP) length of a packet is larger than the MTU, the packet is broken into multiple smaller packets to qualify the MTU, i.e. IP fragmentation.

Once a packet is fragmented from the transmitter, the fragmented packets are defragmented at the receiver side, which affects the system performance. Therefore, improvements are necessary to the conventional technique.
CN 114 039 933 A discloses a 5G network link IP transmission method, applied to a network receiving side, comprising the following steps: get the handshake information when the sending side establishes the transmission control protocol connection; determine the relationship between the maximum message segment length carried in the handshake information and a preset maximum message segment length; when the maximum segment length carried in the handshake information is greater than the preset maximum segment length, the maximum segment length carried in the handshake information is modified to the preset maximum segment length, and the modified handshake information is sent to the sending side; wherein the link established between the sending side and the network receiving side generates a transmission control protocol message according to the preset maximum segment length carried in the modified handshake information, and the maximum segment length of the transmission control protocol message is the preset maximum segment length. Also disclosed is a corresponding IP transmission device for a 5G network link, applied to a network receiving side.

### Summary of the Invention

The present invention therefore provides a transmission method and baseband unit for the 5G network system to solve the abovementioned problem.

According to an aspect of the present invention, a transmission method for a baseband unit (BBU) of a 5G network system is provided as set forth in claim 1.

According to another aspect of the present invention, a baseband unit (BBU) for a 5G network system is provided as set forth in claim 6.
Preferred embodiments of the present invention may be gathered from the dependent claims.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is a schematic diagram of a communication system according to an embodiment of the present invention.
FIG. 2 is a timing diagram of a transmission control protocol three-way handshake of a 5G network system according to an embodiment of the present invention.
FIG. 3 is a schematic diagram of the communication system according to an embodiment of the present invention.
FIG. 4 is a schematic diagram of a transmission method according to an embodiment of the present invention.

### Detailed Description

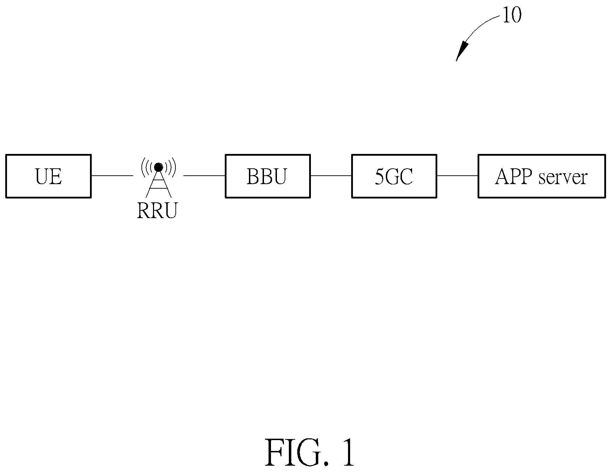

Please refer to FIG. 1, which is a schematic diagram of a communication system 10 according to an embodiment of the present invention. The communication system 10 may be a 5G network system, which includes a user equipment UE, a remote radio unit RRU, a baseband unit BBU, a 5G core (5GC) network and an application (APP) server, wherein the UE may be a 5G access point (AP) application.

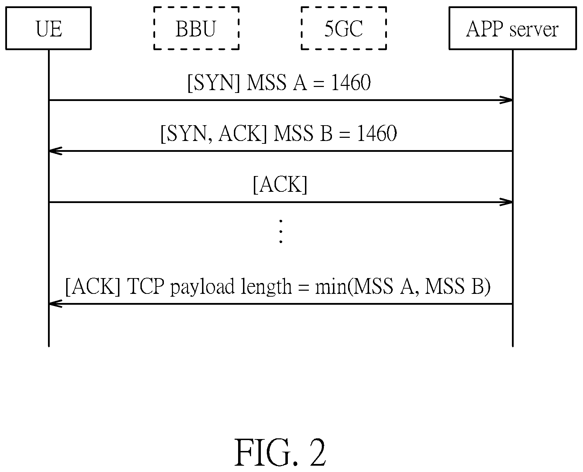

Please refer to FIG. 2, which is a timing diagram of a transmission control protocol (TCP) three-way handshake of the 5G network system according to an embodiment of the present invention. Before exchanging application packets between the 5GC network and the BBU of the 5G network system, a maximum segment size (MSS) value of TCP for the BBU of the 5G network system is determined, wherein the MSS value limits TCP segment size for a transmitter/receiver of the 5G network system.

The MSS value is related to a maximum transmission unit (MTU) size of each node of the 5G network system. In an embodiment, the MTU size for the transport layer of TCP/IP of each node is 1500 bytes. If an encapsulated packet length is larger than 1500 bytes, the encapsulated packet will be broken down into smaller packets for transmission, which leads to Internet protocol (IP) fragmentation/defragmentation and affects the throughput.

As shown in FIG. 2, the TCP three-way handshake is performed between the UE and the APP server for determining the MSS value. In an example, the UE sends a [SYN] message including an MSS value A of 1460 bytes to the APP server, and the APP server sends a [SYN, ACK] message including an MSS value B of 1460 bytes to the UE. After the APP server receives an ACK message from the UE, a TCP payload length is determined according to a minimum value of the MSS value A and the MSS value B for MSS clamping. In this example, the MSS value is determined as 1460 bytes for both of the UE and the APP server.

In order to avoid IP fragmentation/defragmentation, the baseband unit BBU according to an embodiment of the present invention adjusts the MSS value of the TCP three-way handshake packet with GTP header to limit a length of the application packet.

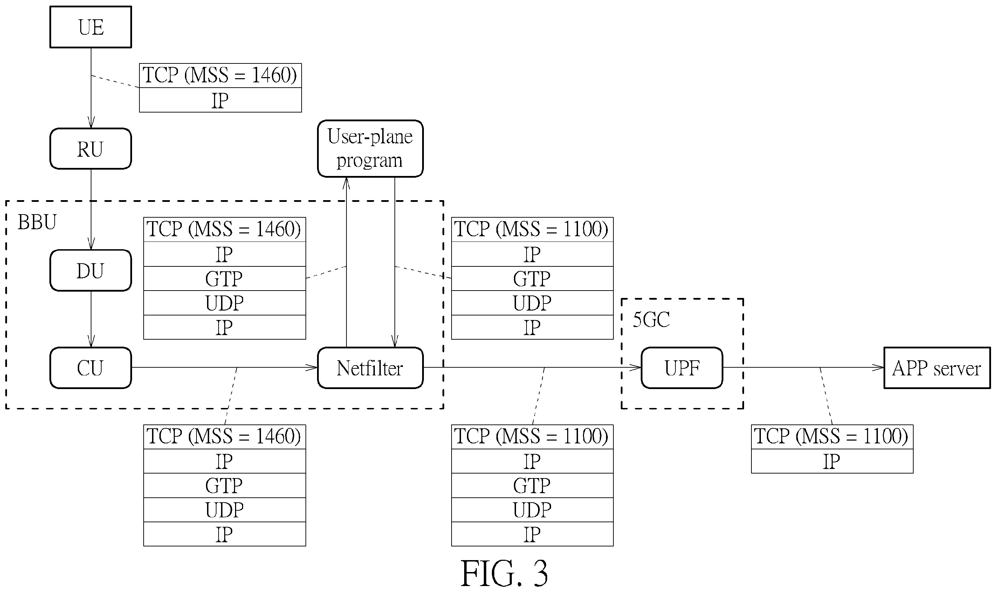

Please refer to FIG. 3, which is a schematic diagram of a communication system 30 according to an embodiment of the present invention. Different to the communication system 10, the communication system 30 includes a user equipment (UE), a radio unit (RU), a baseband unit (BBU), a user-plane program, a 5G core (5GC) network and an application (APP) server. The BBU includes a distribution unit (DU), a central unit (CU) and a Linux kernel framework Netfilter. The distribution unit DU is configured to receive an application packet from the UE and to receive the application packet from the CU The central unit CU is configured to receive the application packet from the DU and to receive a GTP encapsulated application packet from a user plane function (UPF) of the 5GC network. The Linux kernel framework Netfilter is configured to receive the GTP encapsulated application packet from the CU. In an example, the Linux kernel framework Netfilter is a framework in Linux network kernel, which may be a firewall for filtering out the application packets with specific rules and pushing the filtered application packets into a Linux kernel framework Netfilter queue. In an embodiment, the specific rule may be whether the packet length of an application packet is shorter than or equal to a specific value or not, i.e. the packet length will be the length of TCP three-way handshake packet which is short, such that the user-plane application is not required to process too many packets and affect the throughput. In detail, the packet length conforming to the TCP three-way handshake packet includes the GTP/UDP header, and the packet is transmitted to the Netfilter queue according to the specific rule. Practically, the packet for data transmission only passes through the Netfilter and is not transmitted to the Netfilter queue. For example, the packet for the data transmission is around 1400-1500 bytes, and the packet length of the TCP three-way handshake packet is around 100 bytes, thus, the packet length is the length of TCP three-way handshake packet. That is, the packet length of the TCP three-way handshake packet is shorter than the packet length for the data transmission. The user-plane application may be a software implemented on the BBU to modify the content of the TCP three-way handshake packets in the Linux kernel framework Netfilter queue.

More specifically, the user-plane application pulls the application packet from the Linux kernel framework Netfilter queue and checks if the application packet is a GTP packet or not; if yes, i.e. the application packet is a GTP packet, the user-plane application checks whether the inner application packet is a TCP three-way handshake packet or not.

When the inner application packet is determined as a TCP three-way handshake packet, the user-plane application decapsulates the GTP header and modifies the MSS value to avoid IP fragmentation problem.

As shown in FIG. 3, the UE sends out the TCP three-way handshake ([SYN] packet or [SYN,ACK] packet) packet to App Server with the MSS value of 1460 bytes.. When the application packet is sent out from the central unit CU, the application packet is encapsulated with the GTP header, the UDP header and the IP header. The encapsulated packet is pushed into the Linux kernel framework Netfilter queue when passing through the Linux kernel framework Netfilter. Then, the user-plane program pulls the encapsulated packet from the Linux kernel framework Netfilter queue, decapsulates the GTP header and modifies the MSS value of the inner TCP three-way handshake packet to 1100 and re-calculates for the TCP checksum.

After the modification, the modified MSS value is 1100 bytes and the modified GTP encapsulated is pushed back to the Linux kernel framework Netfilter queue and sent to the UPF of the 5GC network. The UPF decapsulates the application packet with the modified GTP header and sends it to the APP Server. In this situation, the TCP payload size of the application packet received by the UE is shorter than 1100 bytes during the TCP connection, since the MSS value of the TCP three-way handshake packet is modified as 1100 bytes and the APP Server takes 1100 bytes as its MSS value. As such, the IP fragmentation/defragmentation problem is avoided.

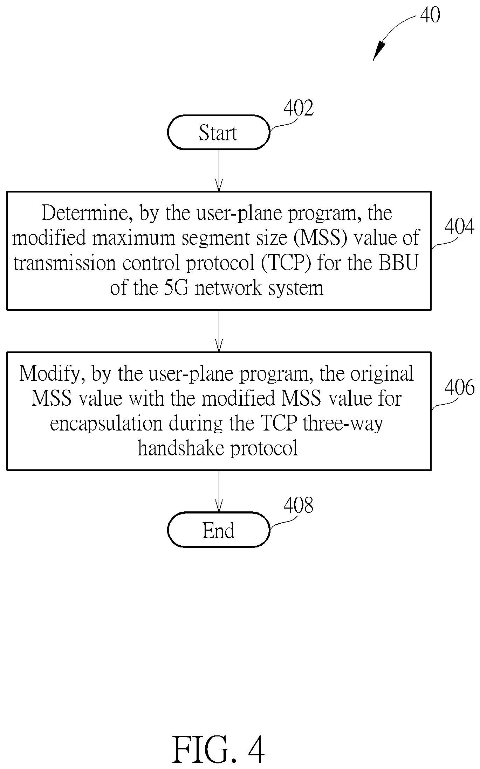

An operation of adjusting the TCP MSS value of the TCP three-way handshake packet may be summarized as a transmission method 40 for the 5G network system, as shown in FIG. 4. The transmission method 40 includes the following steps:
Step 402: Start.
Step 404: Determine, by the user-plane program, the modified maximum segment size (MSS) value of transmission control protocol (TCP) for the BBU of the 5G network system.
Step 406: Modify, by the user-plane program, the original MSS value with the modified MSS value for encapsulation during the TCP three-way handshake protocol.
Step 408: End.

Please refer to the embodiments of the communication system 10 mentioned above for the operation process of the transmission method 40, which is not narrated herein for brevity.

It should be noted that, although the above embodiments are provided to illustrate the concept of the present invention, those skilled in the art may make modifications to the present invention based on different requirements, which are not limited thereto. For example, the MSS value may be modified according to requirements of a user or the computer system. These modifications are not limited thereto, and also belong to the scope of the present invention.

In summary, the present invention provides a transmission method and baseband unit for a 5G network system to solve IP fragmentation/defragmentation problem and improve system throughput.

Those skilled in the art will readily observe that numerous modifications and alterations of the device and method may be made within the scope of the present invention as defined by the appended claims.

## Claims

1. A transmission method (40) for a baseband unit, BBU, of a 5G network system (10), comprising:
determining (404), by a user-plane program, a modified maximum
segment size, MSS, value of transmission control protocol, TCP, connection for the BBU of the 5G network system; and modifying (406), by the user-plane program, an original MSS value
with the modified MSS value for encapsulation during a TCP three-way handshake procedure;
wherein the modified MSS value is related to a packet length of an application packet between a user equipment, UE, and an application, APP, server of the 5G network system (10),
wherein the original MSS value is determined in a TCP three-way handshake performed between the UE and the APP server of the 5G network system (10), and
wherein the modified MSS value is smaller than the original MSS value so as to avoid Internet Protocol, IP, fragmentation/ defragmentation.

2. The transmission method of claim 1, further comprising:
decapsulating, by the user-plane program, a General Packet Radio Service, GPRS, Tunneling Protocol, GTP, header of the application packet;
determining, by the user-plane program, a checksum of the TCP header; and
encapsulating, by the user-plane program, the GTP header with modified MSS value and the checksum of the TCP header.

3. The transmission method of claim 2, further comprising:
pulling, by the user-plane program, the application packet with the GTP header from a Linux kernel framework Netfilter queue; and
modifying, by the user-plane program, the MSS value in the BBU.

4. The transmission method of claim 2, further comprising: decapsulating, by a User Plane Function, UPF, of the 5G network system, the GTP header with modified MSS value and the checksum of the TCP header to the APP server.

5. The transmission method of claim 1, wherein the application packet of a TCP three-way handshake packet is sent from the UE to the APP server.

6. A baseband unit, BBU, for a 5G network system (10), wherein the 5G network system (10) includes a user equipment, UE, and an application, APP, server, and the BBU comprising:
a distribution unit, DU;
a central unit, CU;
a Linux kernel framework Netfilter, configured to receive an application packet from the UE or the APP server; and
a user-plane program, configured to receive the application packet from the Linux kernel framework Netfilter to determine a modified maximum segment size, MSS, value of transmission control protocol, TCP, for the BBU, and to modify an original MSS value with the modified MSS value for encapsulation during a TCP three-way handshake protocol;
wherein the modified MSS value is related to a packet length of the application packet between the UE and the APP server of the 5G network system (10),
wherein the original MSS value is determined in a TCP three-way handshake performed between the UE and the APP server of the 5G network system (10), and
wherein the modified MSS value is smaller than the original MSS value so as to avoid Internet Protocol, IP, fragmentation/ defragmentation.

7. The BBU of claim 6, wherein the user-plane program is configured to decapsulate a General Packet Radio Service, GPRS, Tunneling Protocol, GTP, header of the application packet, to determine a checksum of the TCP header, and to encapsulate the GTP header with modified MSS value and the checksum of the TCP header.

8. The BBU of claim 7, wherein the user-plane program is configured to pull the application packet with the GTP header from a Linux kernel framework Netfilter queue and modify the MSS value in the BBU.

9. The BBU of claim 7, wherein a User Plane Function, UPF, of the 5G network system (10) is configured to decapsulate the GTP header with modified MSS value to the APP server.

10. The BBU of claim 6, wherein the application packet of a TCP three-way handshake packet is sent from the UE to the APP server.

## Patentansprüche

1. Ein Übertragungsverfahren (40) für eine Basisband-Einheit (BBU) eines 5G-Netzwerksystems (10), umfassend:
Bestimmen (404) eines modifizierten Wertes für die maximale Segmentgröße, MSS, der Transmission-Control-Protocol-, TCP-, Verbindung für die BBU des 5G-Netzwerksystems durch ein Benutzer-Ebenen-Programm; und
Modifizieren (406) eines ursprünglichen MSS-Werts durch das Benutzer-Ebenen-Programm mit dem modifizierten MSS-Wert für die Kapselung während eines TCP-Drei-Wege-Handshake-Verfahrens;
wobei der modifizierte MSS-Wert mit einer Paketlänge eines Anwendungspakets zwischen einem Benutzergerät, UE, und einem Anwendungs-, APP-, Server des 5G-Netzwerksystems (10) in Zusammenhang steht,
wobei der ursprüngliche MSS-Wert in einem TCP-Drei-Wege-Handshake bestimmt wird, der zwischen dem UE und dem APP-Server des 5G-Netzwerksystems (10) durchgeführt wird, und
wobei der modifizierte MSS-Wert kleiner als der ursprüngliche MSS-Wert ist, um eine Fragmentierung/Defragmentierung des Internetprotokolls, IP, zu vermeiden.

2. Das Übertragungsverfahren nach Anspruch 1, das ferner umfasst:
Entkapseln eines General-Packet-Radio-Service-, GPRS-, Tunneling-Protokoll-, GTP-, Headers des Anwendungspakets durch das Benutzer-Ebenen-Programm;
Bestimmen einer Prüfsumme des TCP-Headers durch das Benutzer-Ebenen-Programm; und
Kapseln des GTP-Headers mit dem modifizierten MSS-Wert und der Prüfsumme des TCP-Headers durch das Benutzer-Ebenen-Programm.

3. Das Übertragungsverfahren nach Anspruch 2, das ferner umfasst:
Ziehen des Anwendungspakets mit dem GTP-Header aus einer Netzfilter-Warteschlange des Linux-Kern-Frameworks durch das Benutzer-Ebenen-Programm; und
Modifizieren des MSS-Werts in der BBU durch das Benutzer-Ebenen-Programm.

4. Das Übertragungsverfahren nach Anspruch 2, das ferner umfasst:
Entkapseln des GTP-Headers mit geändertem MSS-Wert und der Prüfsumme des TCP-Headers an den APP-Server durch eine Benutzer-Ebenen-Funktion, UPF, des 5G-Netzwerksystems.

5. Das Übertragungsverfahren nach Anspruch 1, wobei das Anwendungspaket eines TCP-Drei-Wege-Handshake-Pakets vom UE an den APP-Server gesendet wird.

6. Eine Basisband-Einheit, BBU, für ein 5G-Netzwerksystem (10), wobei das 5G-Netzwerksystem (10) ein Benutzergerät, UE, und einen Anwendungs-, APP-, Server, APP, umfasst und die BBU umfasst:
eine Verteilungseinheit, DU;
eine Zentraleinheit, CU;
ein Linux-Kern-Framework-Netzfilter, das so konfiguriert ist, dass es ein Anwendungspaket vom UE oder vom APP-Server empfängt; und
ein Benutzer-Ebenen-Programm, das so konfiguriert ist, dass es das Anwendungspaket vom Linux-Kern-Framework-Netzfilter empfängt, um einen modifizierten Wert für die maximale Segmentgröße, MSS, des Übertragungssteuerungsprotokolls, TCP, für die BBU zu bestimmen und einen ursprünglichen MSS-Wert mit dem modifizierten MSS-Wert für die Kapselung während eines TCP-Drei-Wege-Handshake-Protokolls zu modifizieren;
wobei der modifizierte MSS-Wert mit einer Paketlänge des Anwendungspakets zwischen dem UE und dem APP-Server des 5G-Netzwerksystems (10) zusammenhängt,
wobei der ursprüngliche MSS-Wert in einem TCP-Drei-Wege-Handshake zwischen dem UE und dem APP-Server des 5G-Netzwerksystems (10) bestimmt wird, und
wobei der modifizierte MSS-Wert kleiner als der ursprüngliche MSS-Wert ist, um eine Fragmentierung/Defragmentierung des Internetprotokolls, IP, zu vermeiden.

7. Die BBU nach Anspruch 6, wobei das Benutzer-Ebenen-Programm so konfiguriert ist, dass es einen General-Packet-Radio-Service-, GPRS-, Tunneling-Protokoll-, GTP-, Header des Anwendungspakets entkapselt, eine Prüfsumme des TCP-Headers bestimmt und den GTP-Header mit dem modifizierten MSS-Wert und der Prüfsumme des TCP-Headers kapselt.

8. Die BBU nach Anspruch 7, wobei das Benutzer-Ebenen-Programm so konfiguriert ist, dass es das Anwendungspaket mit dem GTP-Header aus einer Netzfilter-Warteschlange des Linux-Kern-Frameworks abruft und den MSS-Wert in der BBU modifiziert.

9. Die BBU nach Anspruch 7, wobei eine Benutzer-Ebenen-Funktion, UPF, des 5G-Netzwerksystems (10) so konfiguriert ist, dass sie den GTP-Header mit dem geänderten MSS-Wert für den APP-Server entkapselt.

10. Die BBU nach Anspruch 6, wobei das Anwendungspaket eines TCP-Drei-Wege-Handshake-Pakets vom UE an den APP-Server gesendet wird.

## Revendications

1. Procédé de transmission (40) pour une unité de bande de base, BBU, d'un système de réseau 5G (10), comprenant :
déterminer (404), par un programme de plan utilisateur, une valeur de taille maximale de segment modifiée, MSS, de la connexion sur un protocole de contrôle de transmission, TCP, pour la BBU du système de réseau 5G ; et
modifier (406), par le programme de plan utilisateur, une valeur MSS d'origine avec la valeur MSS modifiée pour l'encapsulation pendant une procédure de poignée de main à trois voies TCP ;
dans lequel la valeur MSS modifiée est liée à une longueur de paquet d'un paquet d'application entre un équipement utilisateur, UE, et un serveur d'application, APP, du système de réseau 5G (10),
dans lequel la valeur MSS d'origine est déterminée dans une poignée de main à trois voies TCP effectuée entre l'UE et le serveur APP du système de réseau 5G (10), et
dans lequel la valeur MSS modifiée est inférieure à la valeur MSS d'origine afin d'éviter la fragmentation/défragmentation du protocole Internet, IP.

2. Procédé de transmission selon la revendication 1, comprenant en outre :
décapsuler, par le programme de plan utilisateur, un en-tête General Packet Radio Service, GPRS, Tunneling Protocol, GTP, du paquet d'application ;
déterminer, par le programme de plan utilisateur, une somme de contrôle de l'en-tête TCP ; et
encapsuler, par le programme de plan utilisateur, l'en-tête GTP avec la valeur MSS modifiée et la somme de contrôle de l'en-tête TCP.

3. Procédé de transmission selon la revendication 2, comprenant en outre :
extraire, par le programme de plan utilisateur, le paquet d'application avec l'en-tête GTP d'une file d'attente Netfilter du framework du noyau Linux ; et
modifier, par le programme de plan utilisateur, la valeur MSS dans le BBU.

4. Procédé de transmission selon la revendication 2, comprenant en outre :
décapsuler, par une fonction de plan utilisateur, UPF, du système de réseau 5G, l'en-tête GTP avec la valeur MSS modifiée et la somme de contrôle de l'en-tête TCP vers le serveur APP.

5. Procédé de transmission selon la revendication 1, dans lequel le paquet d'application d'un paquet de poignée de main à trois voies TCP est envoyé depuis l'UE vers le serveur APP.

6. Une unité de bande de base, BBU, pour un système de réseau 5G (10), dans lequel le système de réseau 5G (10) comprend un équipement utilisateur, UE, et un serveur d'application, APP, et la BBU comprend :
une unité de distribution, DU ;
une unité centrale, CU ;
un Netfilter du framework du noyau Linux, configuré pour recevoir un paquet d'application provenant de l'UE ou du serveur APP ; et
un programme de plan utilisateur, configuré pour recevoir le paquet d'application provenant du Netfilter du framework du noyau Linux afin de déterminer une valeur de Maximum Segment Size, MSS, modifiée du Transmission Control Protocol, TCP, pour la BBU, et pour modifier une valeur MSS d'origine avec la valeur MSS modifiée pour l'encapsulation pendant une poignée de main à trois voies TCP;
dans lequel la valeur MSS modifiée est liée à une longueur de paquet du paquet d'application entre l'UE et le serveur APP du système de réseau 5G (10),
dans lequel la valeur MSS d'origine est déterminée lors d'une poignée de main à trois voies TCP effectuée entre l'UE et le serveur APP du système de réseau 5G (10), et
dans lequel la valeur MSS modifiée est inférieure à la valeur MSS d'origine afin d'éviter la fragmentation/défragmentation du protocole Internet (IP).

7. La BBU selon la revendication 6, dans laquelle le programme de plan utilisateur est configuré pour décapsuler un en-tête du General Packet Radio Service, GPRS, Tunneling Protocol, GTP, du paquet d'application, pour déterminer une somme de contrôle de l'en-tête TCP, et pour encapsuler l'en-tête GTP avec la valeur MSS modifiée et la somme de contrôle de l'en-tête TCP.

8. La BBU selon la revendication 7, dans laquelle le programme de plan utilisateur est configuré pour extraire le paquet d'application avec l'en-tête GTP d'une file d'attente Netfilter du framework du noyau Linux et modifier la valeur MSS dans la BBU.

9. La BBU selon la revendication 7, dans laquelle une fonction de plan utilisateur, UPF, du système de réseau 5G (10) est configurée pour décapsuler l'en-tête GTP avec une valeur MSS modifiée vers le serveur APP.

10. La BBU selon la revendication 6, dans laquelle le paquet d'application d'un paquet de poignée de main à trois voies TCP est envoyé de l'UE au serveur APP.
